# EUROPÄISCHE PATENTSCHRIFT

(11) **EP 2 501 973 B1**
(45) Veröffentlichungstag und Bekanntmachung des Hinweises auf die Patenterteilung: **30.08.2017**
(21) Anmeldenummer: 10779702.9
(22) Anmeldetag: 08.11.2010
(51) Int. Cl.: B05B 13/04, B05B 9/03, B05B 7/24, F16L 11/12, B05B 5/04

(54) **VERSORGUNGSSCHLAUCH FÜR EINE LACKIERANLAGE**
SUPPLY TUBE FOR A PAINTING SYSTEM
TUYAU SOUPLE DE DISTRIBUTION POUR INSTALLATION DE MISE EN PEINTURE

(30) Priorität: 17.11.2009 DE 102009053601
(43) Veröffentlichungstag der Anmeldung: 26.09.2012
(73) Patentinhaber: Dürr Systems AG, 74321 Bietigheim-Bissingen (DE)
(72) Erfinder: BAUMANN, Michael, 74223 Flein (DE); SEIZ, Bernhard, 74348 Lauffen (DE); SOMMER, Georg M., 71642 Ludwigsburg (DE); BEYL, Timo, 74354 Besigheim (DE)
(74) Vertreter: Beier, Ralph
(86) Internationale Anmeldenummer: PCT/EP2010/006791
(87) Internationale Veröffentlichungsnummer: WO 2011/060889

(56) Entgegenhaltungen:
- EP-A1- 0 373 749
- EP-A1- 1 733 799
- EP-A2- 1 389 492
- WO-A1-03/086642
- US-A- 5 937 912

## Beschreibung

Die Erfindung betrifft einen Lackierroboter mit einem Versorgungsschlauch für eine Lackieranlage, insbesondere zur Druckluftversorgung einer Turbine in einem Rotationszerstäuber oder zur Versorgung eines Zerstäubers mit einem flüssigen Medium, wie Lack oder Spülmittel, oder zur Lenkluftversorgung.

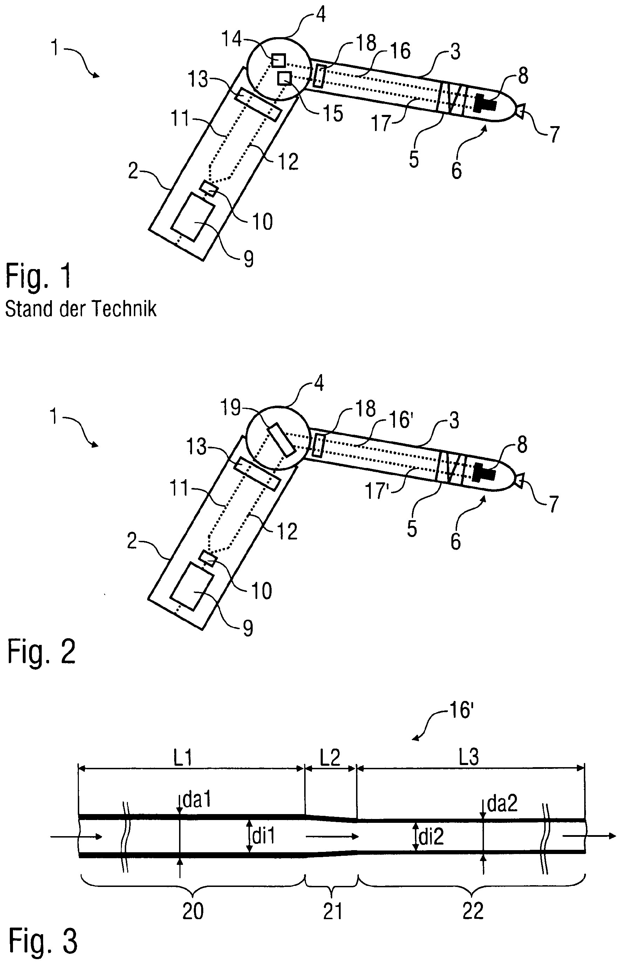

Figur 1 zeigt in vereinfachter Form einen herkömmlichen Lackierroboter 1, der beispielsweise in einer Lackieranlage zur Lackierung von Kraftfahrzeugkarosseriebauteilen eingesetzt werden kann. Der Lackierroboter 1 weist einen proximalen Roboterarm 2 und einen distalen Roboterarm 3 auf, wobei der proximale Roboterarm 2 entsprechend der üblichen Fachterminologie auch als "Arm 1" bezeichnet wird, während der distale Roboterarm 3 üblicherweise als "Arm 2" bezeichnet wird. Der proximale Roboterarm 2 ist an einer Roboterbasis schwenkbar gelagert, wobei die Roboterbasis wahlweise stationär oder verfahrbar sein kann und zur Vereinfachung nicht dargestellt ist. Der distale Roboterarm 3 ist dagegen mit einem Schwenkgelenk 4 am distalen Ende des proximalen Roboterarms 2 schwenkbar angebracht. Am Ende des distalen Roboterarms 3 ist eine mehrgliedrige Roboterhandachse 5 montiert, die einen Rotationszerstäuber 6 hochbeweglich führt, wobei der Rotationszerstäuber 6 als Applikationselement einen Glockenteller 7 aufweist, der von einer Turbine 8 angetrieben wird. Die Druckluft zum Antrieb der Turbine 8 wird über einen Regler 9 zugeführt, der in dem proximalen Roboterarm 2 fest installiert ist, wobei der Regler 9 die Drehzahl der Turbine 8 und damit auch die Drehzahl des Glockentellers 7 durch eine entsprechende Drosselung des zugeführten Luftstroms regelt. Die Verbindung zwischen dem Regler 9 und der Turbine 8 wird durch den proximalen Roboterarm 2, das Schwenkgelenk 4, den distalen Roboterarm 3 und die Roboterhandachse 5 geführt. Nach einem kurzen Schlauchstück von wenigen Zentimetern mit den Abmessungen 9x12mm wird die Verbindung hinter dem Regler 9 über ein Y-Stück 10 auf zwei 9x12mm-Schläuche 11, 12 aufgeteilt, die dann durch ein Schlauchführungselement 13 mit zwei Reduzierstücken 14, 15 in oder an dem Schwenkgelenk 4 verbunden sind. Auf der stromabwärts gelegenen Seite sind die beiden Reduzierstücke 14, 15 mit jeweils einem 6x8mm-Schlauch 16, 17 verbunden, wobei die beiden 6x8mm-Schläuche 16, 17 durch ein Schlauchführungselement 18, den distalen Roboterarm 3 und die Roboterhandachse 5 zu der Turbine 8 geführt sind und diese antreiben.

Die Druckluftversorgung der Turbine 8 ist also aufgeteilt in die beiden 9x12mm-Schläuche 11, 12 in dem proximalen Roboterarm 2 und die beiden 6x8mm-Schläuche 16, 17 in dem distalen Roboterarm 3. Die großformatigen 9x12mm-Schläuche 11, 12 bieten hierbei aufgrund ihres relativ großen Innenquerschnitts den Vorteil eines entsprechend geringen Strömungswiderstands. Allerdings eignen sich die großformatigen 9x12mm-Schläuche 11, 12 nicht für eine Verlegung in der Roboterhandachse 5, da die großformatigen 9x12mm-Schläuche 11, 12 den Torsionsbelastungen in der Roboterhandachse 5 nicht standhalten würden. In der Roboterhandachse 5 sind deshalb die kleineren 6x8mm-Schläuche 16, 17 verlegt, die aufgrund ihres geringeren Querschnitts den Torsionsbelastungen in der Roboterhandachse 5 im Betrieb dauerhaft standhalten.

Nachteilig an diesem bekannten Lackierroboter ist jedoch die Tatsache, dass der Strömungswiderstand der Druckluftversorgung der Turbine 8 zwischen dem Regler 9 und der Turbine 8 durch den relativ geringen Innenquerschnitt der 6x8mm-Schläuche 16, 17 erhöht wird.

Zur Lösung dieses Problems wurde bereits angedacht, die Reduzierstücke 14, 15 aus dem Schwenkgelenk 4 in Strömungsrichtung zu versetzen, d.h. in den distalen Roboterarm 3 hinein. Dies ist jedoch aufgrund der in der Roboterhandachse 5 entstehenden Torsionsbelastungen und dem daraus resultierenden Scheuern weiterer Schläuche an den Reduzierstücken 14, 15 nicht realisierbar. Darüber hinaus würden die Reduzierstücke 14, 15 den mechanischen Belastungen im Bereich der Roboterhandachse 5 nicht standhalten, wenn die Reduzierstücke 14, 15 bis nahe an die Roboterhandachse 5 in den distalen Roboterarm 3 versetzt würden. Im Ergebnis wäre deshalb eine sichere Verbindung zwischen den Reduzierstücken 14, 15 und den 6x8mm-Schläuchen 16, 17 bei einer solchen Lösung nicht sichergestellt. Zudem würden weitere Schläuche in Mitleidenschaft gezogen.

Das vorstehend genannte Problem kann auch nicht dadurch gelöst werden, dass die großformatigen 9x12mm-Schläuche 11, 12 durch die Roboterhandachse 5 hindurchgeführt werden, da derartig großformatige Schläuche den Torsionsbelastungen in der Roboterhandachse 5 nicht standhalten.

Ferner zeigt Figur 4 von DE 603 04 386 T2 ein Leitungssystem mit einer ersten Versorgungsleitung und einer zweiten Versorgungsleitung, wobei die beiden Versorgungsleitungen offensichtlich einen unterschiedlichen Innenquerschnitt aufweisen. Hierbei handelt es sich jedoch nicht um eine einstückige Lei-Leitung, sondern um zwei getrennte Leitungen mit verschiedenen Innenquerschnitten.

Darüber hinaus ist zum Stand der Technik hinzuweisen auf EP 0 373 749 A1, EP 1 389 492 A2, welches den Oberbegriff von Anspruch 1 offenbart, und EP 1 733 799 A1. Diese Druckschriften offenbaren jedoch nur einstückige Versorgungsschläuche mit einem konstanten Innenquerschnitt.

Ferner ist aus WO 03/086642 A1 ein Schlauch für eine Bewässerungsanlage bekannt, wobei der Schlauch unterschiedliche Innenquerschnitte aufweist. Dieser bekannte Schlauch eignet sich jedoch nicht zur Durchführung durch eine Roboterhandachse eines Lackierroboters.

US 5 937 912 offenbart einen Versorgungsschlauch gemäß dem Oberbegriff des Hauptanspruchs. Dieser bekannte Versorgungsschlauch löst jedoch nicht den Zielkonflikt zwischen einem möglichst großen Strömungswiederstand einerseits und einer möglichst großen Torsionsbelastbarkeit andererseits, zumal diese Druckschrift auch keine Hinweise auf einen Einsatz in einer Lackieranlage enthält.

Schließlich ist zum allgemeinen Stand der Technik noch hinzuweisen auf das von der Anmelderin herausgegebene Dokument "Technisches Handbuch: Einführung in die Technik der PKW-Lackierung". Dieses Dokument offenbart jedoch nur herkömmliche Versorgungsschläuche und deren Anwendung im Bereich der Lackiertechnik.

Der Erfindung liegt also die Aufgabe zugrunde, den Strömungswiderstand in einer Druckluftversorgung einer Turbine oder einer Lenkluftversorgung eines Rotationszerstäubers zu verringern.

Diese Aufgabe wird durch einen Lackierroboter mit einem Versorgungsschlauch gemäß dem Hauptanspruch gelöst.

Die Erfindung umfasst die allgemeine technische Lehre, einen Versorgungsschlauch zu schaffen, bei dem ein stromaufwärts gelegener Schlauchabschnitt einen größeren Innenquerschnitt aufweist als ein stromabwärts gelegener Schlauchabschnitt.

Der stromabwärts gelegene Schlauchabschnitt weist hierbei aufgrund seines geringeren Innenquerschnitts eine ausreichende Torsionsbelastbarkeit auf, um den mehrfachen Drehbewegungen einer mehrgliedrigen Roboterhandachse im Betrieb dauerhaft standzuhalten, was mit dem Nachteil eines entsprechend größeren Strömungswiderstands erkauft wird. Der stromaufwärts gelegene Schlauchabschnitt ist dagegen aufgrund eines größeren Innenquerschnitts zu starr, um die Drehbewegungen der mehrgliedrigen Roboterhandachse mitzumachen, was jedoch den Vorteil eines entsprechend geringeren Strömungswiderstands bringt. Die Erfindung löst also den im Stand der Technik bestehenden Zielkonflikt zwischen einem möglichst geringen Strömungswiderstand einerseits und einer möglichst großen Torsionsbelastbarkeit andererseits dadurch, dass der Versorgungsschlauch in zwei Schlauchabschnitte aufgeteilt wird, wobei der proximale Schlauchabschnitt auf einen möglichst geringen Strömungswiderstand hin optimiert ist, während der distale Schlauchabschnitt auf eine möglichst große Torsionsbelastbarkeit hin optimiert ist.

In dem bevorzugten Ausführungsbeispiel der Erfindung weist der stromaufwärts gelegene Schlauchabschnitt mit dem größeren Innenquerschnitt eine Länge von mehr als 30cm, 40cm oder 45cm auf, wobei ein typischer Wert für die Länge des stromaufwärts gelegenen Schlauchabschnitts eine Länge von 1m oder 50cm ist. Die Länge des stromaufwärts gelegenen Schlauchabschnitts entspricht also vorzugsweise im Wesentlichen der Länge eines distalen Roboterarms ("Arm 2") eines Lackierroboters oder zumindest eines Großteils davon. Beispielsweise kann sich der stromaufwärts gelegene Schlauchabschnitt mit dem größeren Innenquerschnitt über eine Länge von mindestens 50%, 60%, 70%, 80% oder sogar mindestens 90% der Länge des distalen Roboterarms erstrecken, um den Strömungswiderstand möglichst klein zu halten.

Der stromabwärts gelegene Schlauchabschnitt mit dem kleineren Innenquerschnitt und dem entsprechend größeren Strömungswiderstand weist dagegen vorzugsweise eine Länge von weniger als 35cm, 30cm, 25cm oder 20cm auf, damit der gesamte Strömungswiderstand nicht unnötig erhöht wird. Die Länge des stromabwärts gelegenen Schlauchabschnitts mit kleineren Innenquerschnitt entspricht also im Wesentlichen der Länge einer Roboterhandachse, so dass der Versorgungsschlauch innerhalb der Roboterhandachse den kleineren Innenquerschnitt und damit eine ausreichende Torsionsbelastbarkeit aufweist.

In dem bevorzugten Ausführungsbeispiel der Erfindung ist der stromaufwärts gelegene Schlauchabschnitt mit dem größeren Innenquerschnitt also wesentlich länger als der stromabwärts gelegene Schlauchabschnitt mit dem kleineren Innenquerschnitt. Dies ist sinnvoll, um den Strömungswiderstand möglichst gering zu halten. Der stromabwärts gelegene Schlauchabschnitt mit dem kleineren Innenquerschnitt ist also vorzugsweise nur so lang, wie es zur Überbrückung der Roboterhandachse erforderlich ist.

Weiterhin ist zu erwähnen, dass sich zwischen den beiden Schlauchabschnitten mit den unterschiedlichen Innenquerschnitten vorzugsweise ein Übergangsabschnitt befindet, in dem sich der Innenquerschnitt des Versorgungsschlauchs in Strömungsrichtung verjüngt. Vorzugsweise ist dieser Übergangsabschnitt zwischen den beiden äußeren Schlauchabschnitten wesentlich kürzer als der stromaufwärts gelegene Schlauchabschnitt und/oder der stromabwärts gelegene Schlauchabschnitt.

Aus der vorstehenden Beschreibung ist bereits ersichtlich, dass der stromaufwärts gelegene Schlauchabschnitt aufgrund seines größeren Innenquerschnitts bezogen auf die Versorgungsschlauchlänge einen geringeren spezifischen Strömungswiderstand aufweist als der stromabwärts gelegene Schlauchabschnitt.

Ferner ist zu erwähnen, dass der stromaufwärts gelegene Schlauchabschnitt vorzugsweise kontinuierlich und/oder absatzfrei in den stromabwärts gelegenen Schlauchabschnitt übergeht.

Darüber hinaus ist zu bemerken, dass der erfindungsgemäße Versorgungsschlauch einstückig ausgebildet ist. Dies bedeutet, dass die beiden Schlauchabschnitte mit den unterschiedlichen Innenquerschnitten Bestandteile des selben Versorgungsschlauchs sind. Davon zu unterscheiden sind beispielsweise mehrgliedrige Schläuche, bei denen die einzelnen Glieder unterschiedliche Innenquerschnitte aufweisen und durch Schlauchverbinder miteinander verbunden sind.

Demzufolge bestehen die beiden Schlauchabschnitte mit den unterschiedlichen Innenquerschnitten vorzugsweise aus demselben Material.

Beispielsweise kann der erfindungsgemäße Versorgungsschlauch aus Polyamid (PA), Polyethylen (PE), Perfluoralkoxylalkan (PFA), Polytetrafluorethylen (PTFE), Polyurethan (PU) oder Polyvinylchlorid (PVC) bestehen. Die Erfindung ist jedoch hinsichtlich des Materials des Versorgungsschlauchs nicht auf die vorstehend aufgeführten Materialbeispiele beschränkt. Darüber hinaus kann der erfindungsgemäße Versorgungsschlauch auch aus einer Kombination dieser Materialien bestehen.

In dem bevorzugten Ausführungsbeispiel der Erfindung ist der Innenquerschnitt des Versorgungsschlauchs sowohl in dem stromaufwärts gelegenen Schlauchabschnitt als auch in dem stromabwärts gelegenen Schlauchabschnitt konstant. Es besteht jedoch im Rahmen der Erfindung auch die Möglichkeit, dass sich der Innenquerschnitt des Versorgungsschlauchs von dem proximalen Ende zu dem distalen Ende hin kontinuierlich verengt.

Ferner ist zu erwähnen, dass der erfindungsgemäße Versorgungsschlauch vorzugsweise lösemittelbeständig und/oder lackbeständig ist, um einen Einsatz in einer Lackieranlage zu ermöglichen.

Zum Einsatz in einer elektrostatischen Beschichtungsanlage besteht ferner die Möglichkeit, dass der Versorgungsschlauch aus einem elektrisch isolierenden Material besteht, das darüber hinaus auch molchbar sein kann. Im Rahmen der Erfindung besteht also die Möglichkeit, dass der erfindungsgemäße Versorgungsschlauch zumindest abschnittsweise molchbar ist.

Hinsichtlich der Dimensionen des erfindungsgemäßen Versorgungsschlauchs bestehen im Rahmen der Erfindung vielfältige Möglichkeiten. Der stromabwärts gelegene Schlauchabschnitt weist vorzugsweise einen Innendurchmesser von weniger als 12mm, 11mm, 10mm, 9mm oder sogar weniger als 8mm auf. Der stromaufwärts gelegene Schlauchabschnitt weist dagegen vorzugsweise einen Innendurchmesser von mehr als 5mm, 6mm, 7mm, 8mm, 9mm, 10mm, 11mm oder 12mm auf.

Der Außendurchmesser des stromabwärts gelegenen Schlauchabschnitts ist dagegen vorzugsweise kleiner als 13mm, 12mm, 11mm, 10mm, 9mm, 8mm oder 7mm, wohingegen der Außendurchmesser des stromaufwärts gelegenen Schlauchabschnitts in dem bevorzugten Ausführungsbeispiel größer ist als 6mm, 7mm, 8mm, 9mm, 10mm oder sogar 11mm.

Auch hinsichtlich der Wandstärke des Versorgungsschlauchs bestehen vielfältige Möglichkeiten. Der stromabwärts gelegene Schlauchabschnitt weist vorzugsweise eine Wandstärke von weniger als 2mm, 1,5mm oder 1,1mm und/oder eine Wandstärke von mehr als 0,5mm, 0,7mm, 0,8mm oder 0,9mm auf. Die Wandstärke des stromaufwärts gelegenen Schlauchabschnitts ist dagegen vorzugsweise kleiner als 2mm, 1,8mm, 1,7mm oder 1,6mm und/oder vorzugsweise größer als 1mm, 1,1mm, 1,2mm, 1,3mm oder 1,4mm.

Weiterhin ist zu erwähnen, dass der erfindungsgemäße Versorgungsschlauch vorzugsweise eine Druckfestigkeit von mehr als 3 bar, 4 bar oder 5 bar aufweist. Wünschenswert ist eine ausreichende Druckfestigkeit zum Betrieb an einem herkömmlichen 6-bar-Netz.

Hinsichtlich der Wandstärke des erfindungsgemäßen Versorgungsschlauchs ist noch zu erwähnen, dass die Wandstärke in dem stromabwärts gelegenen Schlauchabschnitt in der Regel kleiner ist als die Wandstärke in dem stromaufwärts gelegenen Schlauchabschnitt.

Beispielsweise kann der erfindungsgemäße Versorgungsschlauch einen stromaufwärts gelegenen 11x14mm-Schlauchabschnitt und einen stromabwärts gelegenen 9x12mm-Schlauchabschnitt aufweisen. Es besteht jedoch auch die Möglichkeit, dass der stromaufwärts gelegene Schlauchabschnitt die Abmessungen 9x12mm aufweist, während der stromabwärts gelegene Schlauchabschnitt die Dimensionen 6x8mm aufweist. Ein weiteres Ausführungsbeispiel sieht stromaufwärts die Dimensionen 6x8mm und stromabwärts die Dimensionen 2,7x4mm vor.

Darüber hinaus ist zu erwähnen, dass die Erfindung nicht beschränkt ist auf den vorstehend beschriebenen neuartigen Versorgungsschlauch als einzelnes Bauteil. Vielmehr beansprucht die Erfindung Schutz für einen Lackierroboter mit einem derartigen Versorgungsschlauch zur Versorgung eines von dem Lackierroboter geführten Applikationsgeräts, wie beispielsweise eines Rotationszerstäubers.

Der Versorgungsschlauch kann hierbei beispielsweise eine Turbine in dem Rotationszerstäuber mit Antriebsluft versorgen oder das Applikationsgerät mit einem flüssigen Medium versorgen, wie beispielsweise Lack oder Spülmittel. Weiterhin kann der erfindungsgemäße Versorgungsschlauch zur Durchleitung von Lenkluft, Hörnerluft oder Zerstäuberluft eingesetzt werden. Der erfindungsgemäße Versorgungsschlauch eignet sich also grundsätzlich zur Durchleitung aller Fluide, die im Betrieb eines Zerstäubers benötigt werden.

Der erfindungsgemäße Lackierroboter weist vorzugsweise einen proximalen Roboterarm und einen distalen Roboterarm auf, wobei der distale Roboterarm mittels eines Gelenks schwenkbar an dem proximalen Roboterarm angebracht ist. Darüber hinaus verfügt der erfindungsgemäße Lackierroboter vorzugsweise über eine Roboterhandachse zur Führung eines Applikationsgeräts, wobei die Roboterhandachse am Ende des distalen Roboterarms montiert ist. Eine derartige kinematische Anordnung von mehreren schwenkbaren Roboterarmen mit einer Roboterhandachse ist an sich aus dem Stand der Technik bekannt und muss deshalb nicht näher beschrieben werden.

Bei dem erfindungsgemäßen Lackierroboter verläuft der vorstehend beschriebene neuartige und erfindungsgemäß ausgebildete Versorgungsschlauch durch den distalen Roboterarm und durch die Roboterhandachse hindurch zu dem Applikationsgerät, um das Applikationsgerät zu versorgen. Der stromabwärts gelegene Schlauchabschnitt mit dem kleineren Innenquerschnitt ist dabei im wesentlichen auf die Roboterhandachse beschränkt, während sich der stromaufwärts gelegene Schlauchabschnitt mit dem größeren Innenquerschnitt im Wesentlichen über den gesamten distalen Roboterarm oder zumindest einen Großteil davon erstreckt. Diese Beschränkung des stromabwärts gelegenen Schlauchabschnitts mit dem kleineren Innenquerschnitt auf die Roboterhandachse ist vorteilhaft, weil dadurch der gesamte Strömungswiderstand minimiert wird.

Weiterhin ist zu erwähnen, dass in dem bevorzugten Ausführungsbeispiel in dem Gelenk zwischen dem proximalen Roboterarm und dem distalen Roboterarm ein Versorgungsschlauchverbinder angeordnet ist, wobei der Versorgungsschlauchverbinder stromabwärts mit dem erfindungsgemäßen Versorgungsschlauch verbunden ist, der durch den distalen Roboterarm hindurch verläuft, wohingegen der Versorgungsschlauchverbinder stromaufwärts mit einem weiteren Versorgungsschlauch verbunden ist, der in herkömmlicher Weise ausgebildet sein kann und durch den proximalen Roboterarm hindurch verläuft.

Weiterhin kann in dem proximalen Roboterarm ein Drehzahlregler angeordnet sein, der den weiteren, herkömmlichen Versorgungsschlauch mit Druckluft speist.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine schematische Darstellung eines herkömmlichen Lackierroboters mit einem herkömmlichen Versorgungsschlauch,
- Figur 2: eine schematische Darstellung eines erfindungsgemäßen Lackierroboters mit einem erfindungsgemäßen Versorgungsschlauch,
- Figur 3: einen Längsschnitt durch einen erfindungsgemäßen Versorgungsschlauch, sowie
- Figur 4: eine detailliertere Darstellung eines distalen Roboterarms mit einer Handachse und einem Rotationszerstäuber sowie einem durch den distalen Roboterarm und die Handachse hindurchgeführten Versorgungsschlauch.

Das in Figur 2 dargestellte Ausführungsbeispiel eines erfindungsgemäßen Lackierroboters 1 stimmt weitgehend mit dem in Figur 1 dargestellten Ausführungsbeispiel eines herkömmlichen Lackierroboters 1 überein, so dass zur Vermeidung von Wiederholungen auf die vorstehende Beschreibung verwiesen wird, wobei für entsprechende Einzelheiten im Folgenden dieselben Bezugszeichen verwendet werden.

Eine Besonderheit dieses Ausführungsbeispiels besteht darin, dass in dem Schwenkgelenk 4 anstelle der Reduzierstücke 14, 15 ein durchmessergleicher Doppel-Steckverbinder 19 angeordnet ist. Der Doppel-Steckverbinder 19 sieht also sowohl eingangsseitig als auch ausgangsseitig Anschlussstücke für 9x12mm-Schläuche vor.

Eine weitere Besonderheit dieses Ausführungsbeispiels besteht in der Gestaltung der Versorgungsschläuche 16', 17', die in erfindungsgemäßer Weise ausgebildet sind, wie aus Figur 3 ersichtlich ist.

So weist beispielsweise der Versorgungsschlauch 16' einen proximalen Schlauchabschnitt 20, einen Übergangsabschnitt 21 und einen distalen Schlauchabschnitt 22 auf.

Der proximale Schlauchabschnitt 20 hat in diesem Ausführungsbeispiel die Dimensionen 9x12mm. Dies bedeutet, dass der proximale Schlauchabschnitt 20 einen Innendurchmesser di1=9mm und einen Außendurchmesser da1=12mm aufweist, was mit einer Wandstärke von 1,5mm verbunden ist.

Der distale Schlauchabschnitt 22 hat dagegen die Abmessungen 6x8mm. Dies bedeutet, dass der distale Schlauchabschnitt 22 einen Innendurchmesser di2=6mm und einen Außendurchmesser da2=8mm aufweist, was mit einer Wandstärke von 1mm verbunden ist.

In dem Übergangsabschnitt 21 geht der Außendurchmesser von dem Außendurchmesser da1 des proximalen Schlauchabschnitts stufenlos auf den Außendurchmesser da2 des distalen Schlauchabschnitts 22 über. In gleicher Weise ändert sich auch der Innendurchmesser in dem Übergangsabschnitt 21 von dem Innendurchmesser di1 des proximalen Schlauchabschnitts auf den Innendurchmesser di2 des distalen Schlauchabschnitts.

Der distale Schlauchabschnitt 22 weist hierbei eine Länge L3 auf, die nur unwesentlich größer ist als die Länge der Roboterhandachse 5. Auf diese Weise ermöglicht der distale Schlauchabschnitt 22 zwar eine weitgehend ungehinderte Bewegung der Roboterhandachse 5, ohne jedoch den Strömungswiderstand unnötig zu erhöhen.

Der proximale Schlauchabschnitt 20 weist dagegen eine Länge L1=1m auf, so dass sich der proximale Schlauchabschnitt 20 von dem Doppel-Steckverbinder 19 im Wesentlichen über die gesamte Länge des distalen Roboterarms 3 erstreckt, so dass der Strömungswiderstand kaum unnötig verringert wird.

Der Übergangsabschnitt 21 weist dagegen eine Länge L2 von wenigen Zentimetern auf, um einen turbulenzfreien Übergang von dem proximalen Schlauchabschnitt 20 zu dem distalen Schlauchabschnitt 22 zu erreichen.

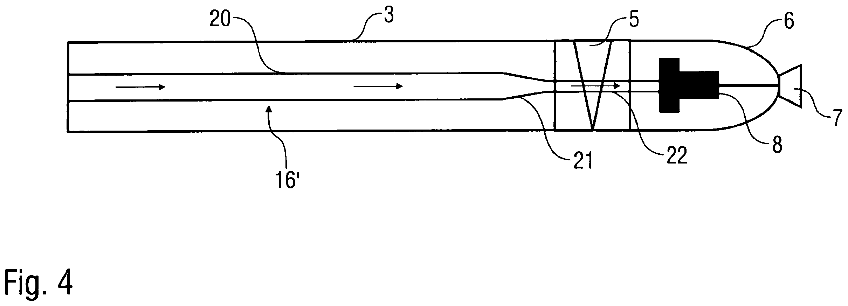

Figur 4 zeigt schließlich eine schematische Darstellung des distalen Roboterarms 3 mit der Roboterhandachse 5 und dem Zerstäuber 6 sowie dem erfindungsgemäßen Versorgungsschlauch 16'. Daraus ist ersichtlich, dass sich der distale Schlauchabschnitt 22 mit dem kleineren Innenquerschnitt im Wesentlichen auf den Bereich der Roboterhandachse 5 beschränkt, wohingegen sich der proximale Schlauchabschnitt 21 mit dem größeren Innenquerschnitt nahezu über die gesamte Länge des distalen Roboterarms 3 erstreckt.

### Bezugszeichenliste:

- 1: Lackierroboter
- 2: Proximaler Roboterarm
- 3: Distaler Roboterarm
- 4: Schwenkgelenk
- 5: Roboterhandachse
- 6: Rotationszerstäuber
- 7: Glockenteller
- 8: Turbine
- 9: Regler
- 10: Y-Stück
- 11: 9×12mm-Schlauch
- 12: 9×12mm-Schlauch
- 13: Schlauchführungselement
- 14: Reduzierstück
- 15: Reduzierstück
- 16: 6×8mm-Schlauch
- 16': Versorgungsschlauch
- 17: 6×8mm-Schlauch
- 17': Versorgungsschlauch
- 18: Schlauchführungselement
- 19: Doppel-Steckverbinder
- 20: Proximaler Schlauchabschnitt
- 21: Übergangsabschnitt
- 22: Distaler Schlauchabschnitt

## Patentansprüche

1. Lackierroboter (1), insbesondere zur Lackierung von Kraftfahrzeugkarosseriebauteilen, mit
a) einem proximalen Roboterarm (2),
b) einem distalen Roboterarm (3), der am Ende des proximalen Roboterarms (2) montiert ist,
c) einer Roboterhandachse (5) zur Führung eines Applikationsgeräts (6), insbesondere eines Rotationszerstäubers (6), wobei die Roboterhandachse (5) am Ende des distalen Roboterarms (3) montiert ist, und
d) einem Versorgungsschlauch (16', 17'), insbesondere zur Druckluftversorgung einer Turbine (8) in einem Rotationszerstäuber (6) oder zur Versorgung eines Zerstäubers (6) mit einem flüssigen Medium, wie Lack oder Spülmittel, oder zur Versorgung eines Zerstäubers (6) mit Lenkluft, mit
d1) einem stromaufwärts gelegenen Schlauchabschnitt (20) und
d2) einem stromabwärts gelegenen Schlauchabschnitt (22),
d4) während der Versorgungsschlauch (16', 17') durch den distalen Roboterarm (3) und durch die Roboterhandachse (5) hindurch zu dem Applikationsgerät (6) verläuft,
e) wobei der stromaufwärts gelegene Schlauchabschnitt (20) einen größeren Innenquerschnitt aufweist als der stromabwärts gelegene Schlauchabschnitt (22), **dadurch gekennzeichnet**,
d3) dass der ganze Versorgungsschlauch (16', 17') einstückig ausgebildet ist,
f) dass der stromabwärts gelegene Schlauchabschnitt (22) mit dem kleineren Innenquerschnitt im Wesentlichen auf die Roboterhandachse (5) beschränkt ist, und
g) dass sich der stromaufwärts gelegene Schlauchabschnitt (20) mit dem größeren Innenquerschnitt im Wesentlichen über den gesamten distalen Roboterarm (3) oder zumindest einen Großteil davon erstreckt.

2. Lackierroboter (1) nach Anspruch 1,
**dadurch gekennzeichnet,**
a) **dass** der stromaufwärts gelegene Schlauchabschnitt (20) mit dem größeren Innenquerschnitt eine Länge (L1) von mehr als 30cm, 40cm oder 45 cm aufweist, insbesondere eine Länge von im Wesentlichen 1m oder 50cm, und/oder
b) **dass** der stromaufwärts gelegene Schlauchabschnitt (20) mit dem größeren Innenquerschnitt eine Länge (L1) aufweist, die im Wesentlichen der Länge eines distalen Roboterarms (3) eines Lackierroboters (1) entspricht, und/oder
c) **dass** der stromabwärts gelegene Schlauchabschnitt (22) mit dem kleineren Innenquerschnitt eine Länge (L3) von weniger als 50cm, 35cm, 30cm, 25cm oder 20cm aufweist, und/oder
d) **dass** der stromabwärts gelegene Schlauchabschnitt (22) mit dem kleineren Innenquerschnitt eine Länge (L3) aufweist, die im Wesentlichen der Länge einer Roboterhandachse (5) entspricht, und/oder
e) **dass** der stromaufwärts gelegene Schlauchabschnitt (20) mit dem größeren Innenquerschnitt wesentlichen länger ist als der stromabwärts gelegene Schlauchabschnitt (22) mit dem kleineren Innenquerschnitt.

3. Lackierroboter (1) nach einem der vorhergehenden Ansprüche, **dadurch gekennzeichnet,**
a) **dass** der stromabwärts gelegene Schlauchabschnitt (22) eine ausreichende Torsionsbelastbarkeit aufweist, um den mehrfachen Drehbewegungen einer mehrgliedrigen Roboterhandachse (5) dauerhaft standzuhalten, und
b) **dass** der stromaufwärts gelegene Schlauchabschnitt (20) aufgrund seines größeren Innenquerschnitts zu starr ist, um die Drehbewegungen der mehrgliedrigen Roboterhandachse (5) mitzumachen.

4. Lackierroboter (1) nach einem der vorhergehenden Ansprüche, **dadurch gekennzeichnet,**
a) **dass** sich zwischen dem stromaufwärts gelegenen Schlauchabschnitt (20) mit dem größeren Innenquerschnitt und dem stromabwärts gelegenen Schlauchabschnitt (22) mit dem kleineren Innenquerschnitt ein Übergangsabschnitt (21) befindet, in dem sich der Innenquerschnitt des Versorgungsschlauchs (16', 17') in Strömungsrichtung verjüngt, und/oder
b) **dass** der Übergangsabschnitt (21) wesentlich kürzer ist als der stromaufwärts gelegene Schlauchabschnitt (20).

5. Lackierroboter (1) nach einem der vorhergehenden Ansprüche, **dadurch gekennzeichnet,**
a) **dass** der stromaufwärts gelegene Schlauchabschnitt (20) kontinuierlich und/oder absatzfrei in den stromabwärts gelegenen Schlauchabschnitt (22) übergeht, und/oder
b) **dass** der stromaufwärts gelegene Schlauchabschnitt (20) und der stromabwärts gelegene Schlauchabschnitt (22) aus demselben Material bestehen.

6. Lackierroboter (1) nach einem der vorhergehenden Ansprüche, **dadurch gekennzeichnet,**
a) **dass** der Innenquerschnitt innerhalb des stromaufwärts gelegenen Schlauchabschnitts (20) im Wesentlichen konstant ist, und/oder
b) **dass** der Innenquerschnitt innerhalb des stromabwärts gelegenen Schlauchabschnitts (22) im Wesentlichen konstant ist.

7. Lackierroboter (1) einem der vorhergehenden Ansprüche, **dadurch gekennzeichnet,**
a) **dass** der Versorgungsschlauch (16', 17') lösemittelbeständig und/oder lackbeständig ist, und/oder
b) **dass** der Versorgungsschlauch (16', 17') aus einem elektrisch isolierenden Material besteht, und/oder
c) **dass** der Versorgungsschlauch (16', 17') in dem stromaufwärts gelegenen Schlauchabschnitt (20) molchbar ist.

8. Lackierroboter (1) nach einem der vorhergehenden Ansprüche, **gekennzeichnet durch** ein Gelenk (4), das den distalen Roboterarm (3) schwenkbar mit dem proximalen Roboterarm (2) verbindet.

9. Lackierroboter (1) nach Anspruch 8,
**dadurch gekennzeichnet,**
a) **dass** in dem Gelenk (4) zwischen dem proximalen Roboterarm (2) und dem distalen Roboterarm (3) ein Versorgungsschlauchverbinder (19) angeordnet ist,
b) **dass** der Versorgungsschlauchverbinder (19) stromabwärts mit dem Versorgungsschlauch (16', 17') verbunden ist, der durch den distalen Roboterarm (3) hindurch verläuft,
c) **dass** der Versorgungsschlauchverbinder (19) stromaufwärts mit einem weiteren Versorgungsschlauch (11, 12) verbunden ist, der durch den proximalen Roboterarm (2) verläuft, und/oder
d) **dass** in dem proximalen Roboterarm (2) ein Drehzahlregler (9) angeordnet ist, der den weiteren Versorgungsschlauch (11, 12) mit Druckluft speist.

10. Lackierroboter (1) nach einem der vorhergehenden Ansprüche, **dadurch gekennzeichnet,**
a) **dass** der Versorgungsschlauch (16', 17') eine Turbine (8) in einem Rotationszerstäuber (6) mit Antriebsluft versorgt, oder
b) **dass** der Versorgungsschlauch (16', 17') das Applikationsgerät mit einem flüssigen Medium versorgt, insbesondere mit Lack oder Spülmittel, oder
c) **dass** der Versorgungsschlauch (16', 17') das Applikationsgerät mit Lenkluft versorgt, wobei die Lenkluft zur Formung des von dem Applikationsgerät abgegebenen Sprühstrahls dient.

## Claims

1. Painting robot (1), in particular for painting motor vehicle body components, comprising
a) a proximal robot arm (2),
b) a distal robot (3), which is mounted on the end of the proximal robot arm (2),
c) a robot wrist (5) for guiding an application device (6), in particular a rotary atomizer (6), wherein the robot wrist (5) is mounted on the end of the distal robot arm (3),
d) a supply tube (16', 17'), in particular for the compressed air supply of a turbine (8) in a rotary atomizer (6) or for the supply of an atomizer (6) with a liquid medium such as paint or rinsing agent or for the supply of an atomizer (6) with guide air, with
d1) an upstream tube section (20) and
d2) a downstream tube section (22),
d4) while the supply tube (16', 17') runs through the distal robot arm (3) and through the robot wrist (5) to the application device (6),
e) wherein the upstream tube section (20) has a larger internal cross section than the downstream tube section (22),
**characterized in that**
d3) the whole supply tube (16', 17') is formed as one piece,
f) the downstream tube section (22) with the smaller internal cross section is essentially limited to the robot wrist (5), and
g) the upstream tube section (20) with the larger internal cross section essentially extends over the whole distal robot arm (3) or at least a major portion thereof.

2. Painting robot (1)according to Claim 1,
**characterized in that**
a) the length (L1) of the upstream tube section (20) with the larger internal cross section is more than 30cm, 40cm or 45 cm, in particular essentially 1m or 50cm, and/or
b) the length (L1) of the upstream tube section (20) with the larger internal cross section essentially corresponds to the length of a distal robot arm (3) of a painting robot (1) and/or
c) the length (L3) of the downstream tube section (22) with the smaller internal cross section is less than 50cm, 35cm, 30cm, 25cm or 20cm and/or
d) the length (L3) of the downstream tube section (22) with the smaller internal cross section essentially corresponds to the length of a robot wrist (5) and/or
e) the upstream tube section (20) with the larger internal cross section is essentially longer than the downstream tube section (22) with the smaller cross section.

3. Painting robot (1) according to any one of the preceding claims, **characterized in that**
a) the downstream tube section (22) has a sufficient torsion capability to permanently withstand the multiple rotary movements of a multi-element robot wrist (5), and
b) due to its larger internal cross section, the upstream tube section (20) is too rigid to cooperate with the rotary movements of the multi-element robot wrist (5).

4. Painting robot (1) according to any one of the preceding claims, **characterized in that**
a) between the upstream tube section (20) with the larger internal cross section and the downstream tube section (22) with the smaller internal cross section there is a transitional section (21) in which the internal cross section of the supply tube (16', 17') tapers in the direction of flow, and/or
b) the transitional section (21) is essentially shorter than the upstream tube section (20).

5. Painting robot (1) according to any one of the preceding claims, **characterized in that**
a) the upstream tube section (20) transits continuously and/or step-free into the downstream tube section (22), and/or
b) the upstream tube section (20) and the downstream tube section (22) are made of the same material.

6. Painting robot (1) according to any one of the preceding claims, **characterized in that**
a) the internal cross section within the upstream tube section (20) is essentially constant, and/or
b) the internal cross section within the downstream tube section (22) is essentially constant.

7. Painting robot (1) according to any one of the preceding claims, **characterized in that**
a) the supply tube (16', 17') is solvent-resistant and/or paint-resistant, and/or
b) the supply tube (16', 17') consists of an electrically insulating material and/or
c) the supply tube (16', 17') in the upstream tube section (20) is piggable.

8. The painting robot (1) according to any of the precedig claims, **characterized by** a joint (4), which connects the distal robot arm (3) pivotably to the proximal robot arm (2).

9. The painting robot (1) according to claim 8, **characterized in that**
a) a supply tube connector (19) is arranged in the joint (4) between the proximal robot arm (2) and the distal robot arm (3),
b) the supply tube connector (19) is connected downstream to the supply tube (16', 17') which runs through the distal robot arm (3),
c) the supply tube connector (19) is connected upstream to a further supply tube (11, 12), which runs through the proximal robot arm (2), and/or
d) a speed regulator (9), which supplies said further supply tube (11, 12) with compressed air, is arranged in the proximal robot arm (2).

10. The painting robot (1) according to any of the preceding claims, **characterized in that**
a) the supply tube (16', 17') supplies a turbine (8) in a rotary atomizer (6) with drive air, or
b) the supply tube (16', 17') supplies the application device with a liquid medium, in particular with paint or rinsing agent, or
c) the supply tube (16', 17') supplies the application device with guide air, wherein the guide air serves to shape the spray jet discharged by the application device.

## Revendications

1. Robot de peinture (1), plus particulièrement pour la peinture de composants de carrosseries de véhicules, avec
a) un bras de robot proximal (2),
b) un bras de robot distal (3), qui est monté à l'extrémité du bras de robot proximal (2),
c) un axe de main de robot (5) pour le guidage d'un appareil d'application (6), plus particulièrement d'un pulvérisateur rotatif (6), l'axe de main de robot (5) étant monté à l'extrémité du bras de robot distal (3) et
d) un tuyau d'alimentation (16', 17'), plus particulièrement pour l'alimentation en air comprimé d'une turbine (8) dans un pulvérisateur rotatif (6) ou pour l'alimentation d'un pulvérisateur (6) avec un milieu liquide, comme de la peinture ou un produit de rinçage, ou pour l'alimentation d'un pulvérisateur (6) avec de l'air de guidage, avec
d1) une portion de tuyau (20) disposée en amont et
d2) une portion de tuyau (22) disposée en aval,
d4) tandis que le tuyau d'alimentation (16', 17') s'étend à travers le bras de robot distal (3) et à travers l'axe de main de robot (5) vers l'appareil d'application (6),
e) la portion de tuyau (20) disposée en amont présentant une section interne supérieure à celle de la portion de tuyau (22) disposée en aval,
**caractérisé en ce que**
d3) tout le tuyau d'alimentation (16', 17') est conçu d'une seule pièce,
f) la portion de tuyau (22) disposée en aval avec la section interne plus petite est globalement limitée à l'axe de main du robot (5) et
g) la portion de tuyau (20) disposé en amont avec la section interne la plus importante s'étend globalement sur tout le bras de robot distal (3) ou sur au moins une grande partie de celui-ci.

2. Robot de peinture (1) selon la revendication 1,
**caractérisé en ce que**
a) la portion de tuyau (20) disposée en amont avec la section interne la plus importante présente une longueur (L1) supérieure à 30 cm, 40 cm ou 45 cm, plus particulièrement une longueur d'environ 1 m ou de 50 cm et/ou
b) la portion de tuyau (20) disposée en amont avec la section interne la plus importante présente une longueur (L1) qui correspond globalement à la longueur d'un bras de robot distal (3) d'un robot de peinture (1), et/ou
c) la portion de tuyau (22) disposée en aval avec la section interne la plus faible présente une longueur (L3) inférieure à 50 cm, 35 cm, 30 cm, 25 cm ou 20 cm et/ou
d) la portion de tuyau (22) disposée en aval avec la section interne la plus faible présente une longueur (L3) qui correspond globalement à la longueur d'un axe de main de robot (5) et/ou
e) la portion de tuyau (20) disposée en amont avec la section interne la plus importante est nettement plus longue que la la portion de tuyau (22) disposée en aval avec la section interne la plus faible.

3. Robot de peinture (1) selon l'une des revendications précédentes, **caractérisé en ce que**
a) la portion de tuyau (22) disposée en aval présente une résistance à la torsion suffisante pour résister durablement aux multiples mouvements de rotation d'un axe de main de robot (5) à plusieurs membres et
b) la portion de tuyau (20) disposée en amont est trop rigide, du fait de sa section interne plus importante, pour accompagner les mouvements de rotation de l'axe de main de robot (5) à plusieurs membres.

4. Robot de peinture (1) selon l'une des revendications précédentes, **caractérisé en ce que**
a) entre la portion de tuyau (20) disposée en amont avec la section interne la plus importante et la portion de tuyau (22) disposée en aval avec la section interne la plus faible, se trouve une portion de transition (21) dans laquelle la section interne du tuyau d'alimentation (16', 17') se rétrécit dans la direction d'écoulement et/ou
b) la portion de transition (21) est nettement plus courte que la portion de tuyau (20) disposée en amont.

5. Robot de peinture (1) selon l'une des revendications précédentes, **caractérisé en ce que**
a) la portion de tuyau (20) disposée en amont passe à la portion de tuyau (22) disposée en aval de manière continue et/ou sans épaulement et/ou
b) la portion de tuyau (20) disposée en amont et la portion de tuyau (22) disposée en aval sont constitués du même matériau.

6. Robot de peinture (1) selon l'une des revendications précédentes, **caractérisé en ce que**
a) la section interne est globalement constante à l'intérieur de la portion de tuyau (20) disposée en amont et/ou
b) la section interne est globalement constante à l'intérieur de la portion de tuyau (22) disposée en aval.

7. Robot de peinture (1) selon l'une des revendications précédentes, **caractérisé en ce que**
a) le tuyau d'alimentation (16', 17') est résistant aux solvants et/ou aux peintures et/ou
b) le tuyau d'alimentation (16', 17') est constitué d'un matériau électriquement isolant et/ou
c) le tuyau d'alimentation (16', 17') peut être écouvillonné dans la portion de tuyau (20) disposée en amont.

8. Robot de peinture (1) selon l'une des revendications précédentes, **caractérisé par** une articulation (4) qui relie le bras de robot distal (3) de manière pivotante avec le bras de robot proximal (2).

9. Robot de peinture (1) selon la revendication 8, **caractérisé en ce que**
a) dans l'articulation (4) entre le bras de robot proximal (2) et le bras de robot distal (3) se trouve un connecteur de tuyau d'alimentation (19),
b) le connecteur de tuyau d'alimentation (19) est relié en aval avec le tuyau d'alimentation (16', 17'), qui s'étend à travers le bras de robot distal (3),
c) le connecteur de tuyau d'alimentation (19) est relié en amont avec un autre tuyau d'alimentation (11, 12), qui s'étend à travers le bras de robot proximal (2) et/ou
d) dans le bras de robot proximal (2) est disposé un régulateur de vitesse de rotation (9) qui alimente l'autre tuyau d'alimentation (11, 12) en air comprimé.

10. Robot de peinture (1) selon l'une des revendications précédentes, **caractérisé en ce que**
a) le tuyau d'alimentation (16', 17') alimente une turbine (8) dans un pulvérisateur rotatif (6) en air d'entraînement ou
b) le tuyau d'alimentation (16', 17') alimente l'appareil d'application avec un milieu liquide, plus particulièrement avec de la peinture ou un produit de rinçage ou
c) le tuyau d'alimentation (16', 17') alimente l'appareil d'application en air de guidage, l'air de guidage servant à former le jet de pulvérisation généré par l'appareil d'application.
